# EUROPÄISCHE PATENTANMELDUNG

(11) **EP 2 939 566 A1**
(43) Veröffentlichungstag der Anmeldung: **04.11.2015**
(21) Anmeldenummer: 14001511.6
(22) Anmeldetag: 29.04.2014
(51) Int. Cl.: A47B 96/20, B32B 21/04

(54) **Möbelplatte**

(71) Anmelder: Agfalterer, Friedrich, 4120 Neufelden (AT)
(72) Erfinder: Afgalterer, Friedrich P., 4120 Neufelden (AT)
(74) Vertreter: Landgraf, Elvira

(57) **Zusammenfassung**

Die Erfindung betrifft eine Möbelplatte, bestehend aus Holz, wobei die Möbelplatte aus im Allgemeinen unregelmäßig geformten verwitterten oder durch Schädlinge befallenen Holzteilen, die miteinander durch Bereiche aus transparentem, transluzentem, opakem und/oder eingefärbten Kunstharz dauerhaft und fugenlos miteinander verbunden sind, besteht, sowie eine Verfahren zu deren Herstellung und deren Verwendung.

## Beschreibung

Die vorliegende Erfindung betrifft eine Möbelplatte bestehend aus mehr oder weniger unregelmäßig geformten bzw. gewachsenem Holz, das bereits Verwitterungserscheinungen zeigt in Verbindung mit transparentem, transluzentem, opakem und/oder eingefärbten Kunstharz.

Aus DE 39 23 555 A ist ein dekoratives Blatt und ein Verfahren zu dessen Herstellung bekannt.

Das dekorative Blatt weist eine Grundplatte auf und ein Harz-vorimprägniertes Laminat, welches entgegengesetzt mit der Grundplatte verbunden ist, und ein Holz/Harz-Composit, welches entgegengesetzt mit der Grundplatte verbunden ist. Das Holz/Harz-Composit weist dabei eine Anzahl von hölzernen Stückchen auf, die im Harz-Composit verteilt sind

Zur Herstellung des dekorativen Blattes, das zur Oberflächendekoration von Möbeln, Baumaterialien, Autoausstattungen etc. verwendet wird, wird ein Harz-vorimprägniertes Laminat, das aus einer Anzahl von Harz-vorimprägnierten Blättern besteht, an einem Holz/Harz-Composit befestigt, um mit einer Grundplatte durch Erhitzen unter Druck verbunden zu werden. Mechanische Verstärkung durch das Harz-vorimprägnierte Laminat verhindert gut einen zufälligen Bruch des Holz/Harz-Composits während der Herstellung und die Bildung einer unebenen Oberfläche während des Erhitzens unter Druck. Die Oberfläche solch eines Holz/Harz-Composits kann nach Polieren zusätzlich mit einer transparenten Kunstharzschicht beschichtet werden, um einen besseren ästhetischen Eindruck auf dem Endprodukt zu erzielen.

Das dekorative Blatt weist rein ästhetische Funktionen auf.

Aufgabe der vorliegenden Erfindung war es, eine Möbelplatte bereitzustellen, die aus unregelmäßig geformten bzw. gewachsenen Holz, das mehr oder weniger verwittert und/oder von tierischen oder pflanzlichen Schädlingen befallen ist, besteht, wobei Holzteile miteinander durch Bereiche aus transparentem, transluzentem, opakem und/oder eingefärbten Kunstharz miteinander verbunden sind.

Gegenstand der Erfindung ist daher eine Möbelplatte, bestehend aus Holz, dadurch gekennzeichnet, dass die Möbelplatte aus unregelmäßig geformten verwitterten bzw. von tierischen oder pflanzlichen Schädlingen befallenen Holzteilen, die miteinander durch Bereiche aus transparentem, transluzentem, opakem und/oder eingefärbtem duroplastischen Kunstharz dauerhaft und fugenlos miteinander verbunden sind, besteht.

Als verwitterte Holzteile werden unregelmäßig geformte bzw. gewachsene Hölzer, die bereits Witterungseinflüssen, wie Feuchtigkeit, Nässe, Hitze und auch tierischem oder pflanzlichen Schädlingsbefall ausgesetzt waren, verwendet.

Es kann sich dabei beispielsweise um vorerst geschnittenes Massivholz handeln, das durch Lagerung unter bestimmten Bedingungen, wie Feuchtigkeit und/oder Wärme, oder durch unsachgemäße Lagerung Umwelteinflüssen ausgesetzt war, wodurch die Holzfaserstruktur einem Abbau bzw. einer Verwitterung unterworfen wurde. Es kann sich aber auch um Massivholz handeln, das bereits einen Schädlingsbefall aufweist.

Ferner kann es sich um sogenanntes Schwemmholz bzw. Treibholz oder längere Zeit unter Wasser befundenes Holz handeln.

Derartige verwitterte Holzteile sind allerdings üblicherweise nicht für die Herstellung von Möbelplatten und dergleichen geeignet, da sie meist nicht ausreichend stabil sind, vor allem brüchig sein können

Erfindungsgemäß werden die derart verwitterten Hölzer in Platten oder Brettform geschnitten und/oder ungesäumt oder formgefräst eingesetzt. Die Hölzer konnten aber auch Bearbeitung mit ihrer natürlichen Form eingesetzt werden.

Es ist auch möglich die Konturen der verwitterten Holzteile durch Fräsen, Schneiden Sägen und dergleichen zu verändern bzw. zu formen und an das gewünschte optische Erscheinungsbild anzupassen.

Als Holzarten kommen sämtliche Holzarten in Frage, beispielweise Nuss-, Kastanien-, Teak-, Eichen-, Birken-, Buchen-, Apfelbaum-, Akazien-, Birnbaum-, Olivenbaum-, Kirschbaum, Fichten-, Tannen-, Lärchen-, Ahorn-, Aspe-, Erlen-, Pappel-, Eiben-, Eschen-, Pinien-, Palisander-, Ramin-, Mahagoni-, Ulmen-, Wenige-, Zebrano-, Zirbelkiefer-, Kieferholz, wobei diese Holzarten auch in thermobehandelter Form eingesetzt werden können.

Es ist auch möglich in einer Möbelplatte Holzteile unterschiedlicher Holzarten zu verwenden.

Die Verbindung der zumindest zum Teil verwitterten Holzteile erfolgt durch Ausgießen der Zwischenräume zwischen den Massivholzteilen, also im Wesentlichen parallel zur Holzfaser durch ein duroplastisches Kunstharz wobei gleichzeitig das Holz durchtränkt und stark verwitterte Teile aufgefüllt werden. Geeignete duroplastische Kunstharze sind bekannt, insbesondere werden Kunstharze auf Epoxid-, Polyurethan- oder Polyesterbasis eingesetzt.

Je nach verwendeter Harzzusammensetzung kann die Verbindung glasklar, transparent, transluzent, opak oder auch eingefärbt gestaltet werden.

Dazu kann die eingesetzte Kunstharzzusammensetzung Füllstoffe oder Farbstoffe oder Pigmente zum Einfärben der Kunststoffzusammensetzung enthalten.

Geeignete Füllstoffe, Farbstoffe oder Pigmente sind beispielsweise Titanoxid, ZnS, Kaolin, Aluminium, Chrom- und Siliciumoxide, Pigmente oder Farbstoffe auf organischer Basis, wie Phthalocyaninblau, i-Indolidingelb, Dioxazinviolett, Effektpigmente und deren Mischungen und dergleichen.

Durch die Verbindung der verwitterten Holzteile durch Auffüllen und/oder Ausgießen der Zwischenräume mit einem duroplastischen Kunstharz wird einerseits die Struktur der verwitterten Holzteile stabilisiert, andererseits das verwitterte Holz konserviert und weitere Schäden durch einen etwa vorhandenen Schädlingsbefall dauerhaft verhindert bzw. die vorhandenen Schädlinge abgetötet.

Ein weiterer Gegenstand der Erfindung ist ein Verfahren zur Herstellung einer Möbelplatte gekennzeichnet durch folgende Verfahrensschritte:
a) Einlegen der verwitterten Holzteile in eine Form
b) gegebenenfalls versehen der Verbundkanten der verwitterten Holzteile mit einem Anstrich aus Kunstharz
c) Ausgießen der Längszwischenräume und ggf. der Holzcharakteristiken wie Risse und Äste oder der durch Schädlinge verursachten Beschädigungen mit Kunstharz
d) Aushärten des Kunstharzes und
e) Entnehmen des Verbundes aus der Form.

Zur Herstellung der Möbelplatte werden die verwitterten Holzteile in entsprechende Formen eingelegt, wobei die Form die Dimension und zumindest teilweise die Kontur der fertigen Möbelplatte bestimmt. Zumindest ein Teil der Kontur kann durch die Kontur des verwendeten verwitterten Holzteils bestimmt sein.

Die Verbundkanten werden dabei vorteilhafterweise mit einem Anstrich aus dem zur Verbindung verwendeten Kunstharz versehen um einerseits einen Abschluss, andererseits eine Verbesserung der Haftung zu den Kunstharzbereichen zu erzielen.

Anschließend werden die Zwischenräume sowie ggf. vorhandene Holzcharakteristiken, wie beispielsweise Risse, Astlöcher, Fehlstellen und dergleichen mit dem Kunstharz ausgegossen bzw. gefüllt und getränkt. Anschließend erfolgt die Aushärtung des Kunstharzes auf übliche Weise, beispielsweise physikalisch durch Trocknung.

In einem weiteren Schritt werden die Verbundteile entspannt, aus der Form genommen.

Gegebenenfalls kann anschließend die Oberfläche geschliffen, poliert, gebürstet und/oder mit holztypischen Oberflächenmaterialien behandelt werden.

Sollen in die Möbelplatte Konstruktions- oder Dekorteile aus Metall, Kunststoff, Stein oder sonstigen Materialien beispielsweise Anschraubmuffen oder dergleichen eingebracht werden, können diese vorteilhafterweise bereits vor dem Aushärten des Kunstharzes direkt eingebracht werden. Es ist aber auch möglich nach Aushärtung des Kunstharzes diese Konstruktionsteile beispielsweise durch Schrauben in die Möbelplatte einzubringen.

Auf Basis obiger Materialkomposition, können aus diesen Materialien Möbeldekorteile bzw. statisch tragende Teile in Materialstärken zwischen 3 mm und 100 mm gefertigt werden.

Durch das erfindungsgemäße Verfahren wird eine dauerhafte, ggf. lichtdurchlässige fugenlose Verbindung unregelmäßig geformter Massivholzteile mit Kunstharz hergestellt.

Die erfindungsgemäße Möbelplatte ist statisch belastbar wie Vollmassivholzmöbelplatten.

Die Schraubenauszugsfestigkeit ist jedoch bei der erfindungsgemäßen Möbelplatte deutlich besser als bei reinen Massivholzmöbelplatten.

Die angewendeten Techniken stabilisieren den Schädlingsbefall und verhindern eine weitere Holzschädigung.

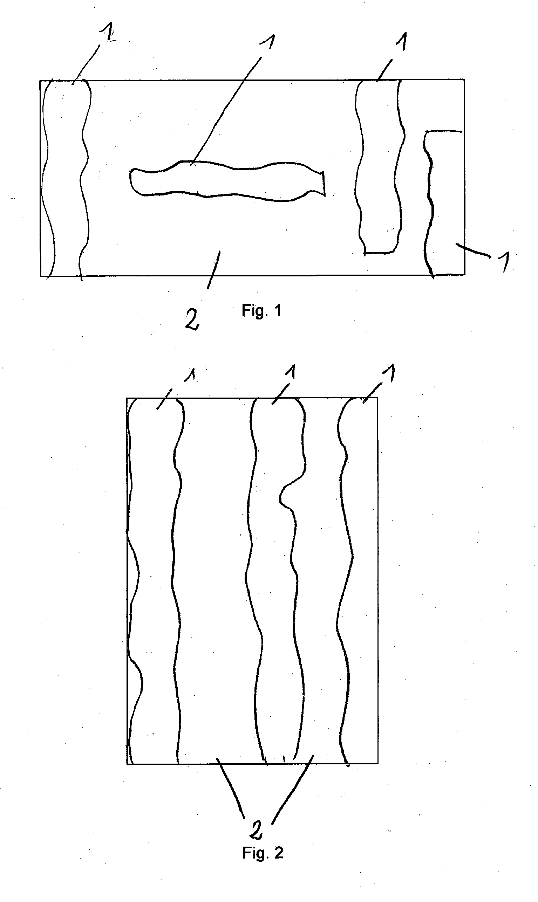

In den Figuren 1 bis 4 sind beispielhaft erfindungsgemäße Möbelplatten in Aufsicht dargestellt.

Figur 5 zeigt einen Schnitt durch die erfindungsgemäße Möbelplatte.

Darin bedeuten
1 die unregelmäßig geformten verwitterten bzw. von Schädlingen befallenen Holzteile
2 die Bereiche aus Kunstharz.

Dabei stellen die gezeigte Kontur und Anordnung der verwitterten Holzteile und der Bereiche aus duroplastischem Kunstharz lediglich beispielhafte Ausführungen dar, die den Umfang der Erfindung nicht beschränken.

Die erfindungsgemäße Möbelplatte kann insbesondere für Möbel bzw. Möbelteile, insbesondere Platten (wie Tischplatten, Banksitze, Abdeck- und Barplatten), sowie Füllungen für Türen und Möbelfronten und dekorative Einzelstücke verwendet werden.

## Patentansprüche

1. Möbelplatte, bestehend aus Holz, **dadurch gekennzeichnet, dass** die Möbelplatte aus unregelmäßig geformten verwitterten Holzteilen, die miteinander durch Bereiche aus transparentem, transluzentem, opakem und/oder eingefärbtem duroplastischen Kunstharz dauerhaft und fugenlos miteinander verbunden sind, besteht.

2. Möbelplatte nach Anspruch 1, **dadurch gekennzeichnet, dass** Kunstharze auf Epoxid-, Polyurethan- oder Polyesterbasis verwendet werden.

3. Möbelplatte nach einem der Ansprüche 1 bis 2, **dadurch gekennzeichnet, dass** das Kunstharz Füll-, Farbstoffe oder Pigmente enthält.

4. Möbelplatte nach einem der Ansprüche 1 bis 3, **dadurch gekennzeichnet, dass** die Kontur der Holzteile durch die natürliche Form vorgegeben oder durch Fräsen, Sägen oder Schneiden geformt ist.

5. Möbelplatte nach einem der Ansprüche 1 bis 4, **dadurch gekennzeichnet, dass** die verwitterten Holzteile aus Nuss-, Kastanien-, Teak-, Eichen-, Birken-, Buchen-, Apfelbaum-,Akazien-, Birnbaum-, Olivenbaum-, Kirschbaum, Fichten-, Tannen-, Lärchen-, Ahorn-, Aspe-, Erlen-, Pappel-, Eiben-, Eschen-, Pinien-, Palisander-, Ramin-, Mahagoni-, Ulmen-, Wenige-, Zebrano-, Zirbelkiefer-, Kieferholz welches fallweise thermobehandelt wird bestehen.

6. Möbelplatte nach einem der Ansprüche 1 bis 5, **dadurch gekennzeichnet, dass** in der Möbelplatte ein oder mehrere unterschiedliche Holzarten verwendet werden.

7. Verfahren zur Herstellung einer Möbelplatte **gekennzeichnet durch** folgende Verfahrensschritte:
a) Einlegen der verwitterten Holzteile in eine Form
b) ggf. zumindest teilweises Versehen der Verbundkanten verwitterten Holzteile mit einem Anstrich aus duroplastischem Kunstharz
c) Ausgießen der Längszwischenräume (parallel zur Holzfaser) und ggf. der Holzcharakteristiken wie Risse und Äste mit duroplastischem Kunstharz
d) Aushärten des Kunstharzes und
e) Entnehmen des Verbundes aus der Form.

8. Verfahren nach Anspruch 7, **dadurch gekennzeichnet, dass** der Verbund zur Endbearbeitung geschliffen, poliert und gegebenenfalls mit möbeltypischen Oberflächenmitteln behandelt werden kann.

9. Verfahren nach einem der Ansprüche 7 oder 8, **dadurch gekennzeichnet, dass** Konstruktions- oder Dekorteile aus Metall, Kunststoff, Stein oder sonstigen Materialien vor dem Aushärten des duroplastischen Kunstharzes in die Möbelplatte eingebracht werden.

10. Verwendung der Möbelplatte nach einem der Ansprüche 1 bis 6 als für Möbel bzw. Möbelteile, als Platten, wie Tischplatten, Banksitze, Abdeck- und Barplatten, sowie Füllungen für Türen und Möbelfronten und dekorative Einzelstücke.
